# EUROPÄISCHE PATENTSCHRIFT

(11) **EP 2 349 622 B1**
(45) Veröffentlichungstag und Bekanntmachung des Hinweises auf die Patenterteilung: **09.05.2018**
(21) Anmeldenummer: 09803992.8
(22) Anmeldetag: 12.11.2009
(51) Int. Cl.: B23D 77/00, B23D 77/02

(54) **MEHRSCHNEIDIGES SPANABHEBENDES BOHRUNGS-NACHBEARBEITUNGSWERKZEUG**
MULTI-BLADE CUTTING AND DRILLING FINISHING TOOL
OUTIL DE FINITION D'ALÉSAGE PAR ENLÈVEMENT DE COPEAUX, À PLUSIEURS TRANCHANTS

(30) Priorität: 12.11.2008 DE 102008056840
(43) Veröffentlichungstag der Anmeldung: 03.08.2011
(73) Patentinhaber: Gühring KG, 72458 Albstadt (DE)
(72) Erfinder: AST, Holger, 72459 Albstadt (DE); BOZKURT, Lutfi, 72474 Winterlingen (DE); SOMMERFELDT, Peter, 99826 Hallungen (DE); BITZER, Jochen, 72461 Albstadt-Truchtelfingen (DE)
(74) Vertreter: Winter, Brandl, Fürniss, Hübner, Röss, Kaiser, Polte - Partnerschaft mbB
(86) Internationale Anmeldenummer: PCT/DE2009/001590
(87) Internationale Veröffentlichungsnummer: WO 2010/054637

(56) Entgegenhaltungen:
- JP-A- 2000 000 719
- JP-A- 2007 044 846
- JP-U- 1 060 823
- US-A- 3 199 382

## Beschreibung

Die Erfindung betrifft ein mehrschneidiges spanabhebendes Bohrungs-Nachbearbeitungswerkzeug bzw. -Feinbearbeitungswerkzeug, gemäß dem Oberbegriff des Patentanspruchs 1.

Derartige Werkzeuge sind häufig als sogenannte Stufenreibahlen ausgeführt, mit denen es gelingt, mit einem einzigen Arbeitshub hochpräzise axial gestaffelte Bohrungen unterschiedlicher Durchmesser auszubilden, die darüber hinaus verhältnismäßig tief in einem Werkstück versenkt angeordnet sind.

An ein solches Werkzeug werden dementsprechend höchste Anforderungen hinsichtlich Stabilität und Arbeitsgenauigkeit gestellt. Eine besondere Schwierigkeit bei der Gestaltung derartiger Hochleistungs-Reibahlen besteht dabei darin, dass die Formstabilität des Werkzeugs und die Arbeitsgenauigkeit der Schneiden auch dann noch gegeben sein müssen, wenn beträchtliche Arbeitstiefen vorliegen. So muss beispielsweise bei der Herstellung von Bohrungen zur Aufnahme von Hydraulik-Kolbenschiebern, die z. B. in Steuerblöcken von Kraftfahrzeug-Steuereinrichtungen benötigt werden, ein Abstand von der Einspannstelle des Werkzeugs bis zum vordersten Schneidensatz von mehr als 150 mm überbrückt werden, wobei der kleinste Nenndurchmesser der zu bearbeitenden Bohrung beispielsweise bei lediglich etwa 11 mm liegt. Die mit einem derartigen Werkzeug herzustellenden Bohrungen müssen andererseits durchgehend mit hoher Oberflächengüte und äußerst exakter Konzentrizität unter Einhaltung sehr enger Toleranzen hergestellt werden, so dass es besonderer Maßnahmen bedarf, um die gestuften Bohrungen mit erheblichem axialen Abstand voneinander mit sehr engen Durchmessertoleranzen von nur einigen µm und Zylinder-Lagetoleranzen ebenfalls im µm-Bereich sicherzustellen.

Um die Fluchtungsgenauigkeit der Bohrung bzw. der gestuften Bohrungen bei Einhaltung der engen Maß- und Lagetoleranzen realisieren zu können, ist es üblich, die über den Umfang des Werkzeugs häufig gleichmäßig verteilten Schneiden durch dazwischen liegende Führungsleisten zu stabilisieren. Ein solches Werkzeug ist beispielsweise im Dokument DE 197 19 893 A1 beschrieben.

Es zeigt sich aber, dass ein derart aufgebautes Reibwerkzeug nicht in der Lage ist, tief liegende Bohrungen bzw. Stufenbohrungen mit axial weit auseinander liegenden Bearbeitungsoberflächen mit der oben beschriebenen hohen Präzision herzustellen. Im Übrigen zeigt sich bei einem derartigen bekannten Aufbau der Nachteil, dass die Führungsleisten die Flexibilität bei der Gestaltung des Werkzeugs erheblich einschränken, da diese Führungsleisten in Umfangsrichtung verhältnismäßig viel Bauraum in Anspruch nehmen.

Aus den Dokumenten US 3 199 382 A und JP 2000 000719 A ist jeweils ein mehrschneidiges spanabhebendes Bohrungs-Nachbearbeitungswerkzeug gemäß dem Oberbegriff des Patentanspruchs 1 bekannt geworden. Der Führungsleistensatz ist im Falle des Werkzeugs gemäß US 3 199 382 A zylindrisch geschliffen und im Durchmesser etwas kleiner gehalten als der Teilkreis, auf dem die Schneiden des Schneidensatzes liegen. Allerdings fluchten die Schneidkanten des Schneidensatzes nicht mit den Führungsleisten. Gemäß JP 2000 000719 A ist der Durchmesser des Führungsleistensatzes nicht auf den Außendurchmesser des in Vorschubrichtung vor ihm liegenden Schneidensatzes abstimmbar, da letzterer im Durchmesser veränderlich ist.

Der Erfindung liegt deshalb die Aufgabe zugrunde, ein vorzugsweise drehangetriebenes, mehrschneidiges spanabhebendes Bohrungs-Nachbearbeitungswerkzeug, insbesondere eine Reibahle, zur Bearbeitung tief liegender bzw. gestufter Bohrungen bereitzustellen, mit dem es gelingt, axial verhältnismäßig tief im Werkstück bzw. weit auseinander liegende und im Durchmesser bis hinunter zu verhältnismäßig kleinen Bohrungen mit höchster Präzision, Maßhaltigkeit und Oberflächengüte herzustellen, wobei der Aufbau so gehalten sein soll, dass hinsichtlich der Bestückung der Schneidensätze ein Höchstmaß an Flexibilität gegeben ist.

Diese Aufgabe wird durch die Merkmale des Patentanspruchs 1 gelöst.

Erfindungsgemäß kommt ein besonders gestalteter Führungsleistensatz zur Anwendung, der in Vorschubrichtung hinter dem Schneidensatz - oder bei der Ausgestaltung als Stufenwerkzeug zwischen zwei Schneidensätzen mit unterschiedlichem Nenndurchmesser - angeordnet und von Schneideinsätzen gebildet ist, die jeweils mit den Schneiden des in Vorschubrichtung des Werkzeugs benachbarten Schneidensatzes axial fluchten. Die Schneideinsätze des Führungsleistensatzes, die vorzugsweise zylindrische geschliffen sind, haben ein Nenndurchmessermaß, das im 1/1000-stel-Bereich kleiner ist als das Nenndurchmessermaß des in Vorschubrichtung benachbarten Schneidensatzes. Diese Differenz im Nenndurchmesser liegt in der Größenordnung des Doppelten sich im Einsatz des Werkzeugs aufbauenden Schmierspalts zur soeben bearbeiteten Bohrungswandung und sie liegt beispielsweise bei einem Werkzeug mit einem Nenndurchmesser von ca. 13 mm im Bereich zwischen 11 und 17 µm. Dieses Differenzmaß der Nenndurchmesser ist also im Wesentlichen so eingestellt, dass es von einem Schmierfilm eines zum Einsatz kommenden Kühl-/Schmiermittels ausgefüllt werden kann, so dass der Führungsleistensatz wirksam zur Stabilisierung des Werkzeugs dienen kann.

Weil die hochpräzise positionierten Schneideinsätze des Führungsleistensatzes axial mit den Schneiden des in Vorschubrichtung des Werkzeugs benachbarten Schneidensatzes axial fluchten, zu diesen Schneiden aber axial versetzt sind, wird der ohnehin vorhandene axiale Bauraum zwischen dem Schneidensatz und dem Werkzeugschaft bzw. - bei der Ausgestaltung als Stufenwerkzeug zwischen den Schneidensätzen - der Reibahle in vorteilhafter Weise genutzt. Die Anzahl der Schneiden im Bereich des zumindest einen Schneidensatzes kann auf diese Weise angehoben werden, was der Flexibilität bei der Gestaltung des Werkzeugs unter Anpassung an das jeweils vorliegende Zerspanungsproblem weiter zugute kommt.

Insbesondere dann, wenn der zumindest eine Schneidensatze mit einer geraden Zahl von Schneiden bestückt ist und diese Schneiden im Wesentlichen gleichmäßig über den Umfang verteilt sind, ergibt sich der besondere Vorteil, dass jeweils ein Schneideinsatz des Führungsleistensatzes im Wesentlichen diametral einer Schneide des in Vorschubrichtung benachbarten Schneidensatzes gegenüberliegt, wodurch sich eine besonders effiziente Führung der Schneidensätze realisieren lässt. Die Schneideinsätze des Führungsleistensatzes sind extrem platzsparend und können im Wesentlichen aufgebaut werden wie die Schneiden der eigentlichen Schneidensätze des Werkzeugs. Auf diese Weise wird zusätzlich die Herstellung des Werkzeugs vereinfacht.

Vorteilhafte Weiterbildungen sind Gegenstand der Unteransprüche.

Es hat sich herausgestellt, dass die Einstellung des Nenndurchmessermaßes des Führungsleistensatzes auf erfindungsgemäße Werte zu besonders guten Ergebnissen führt, wenn Kühl-/Schmiermittel mit konventionellen Parametern (Konsistenz, Dichte, Geschwindigkeit, Druck) zugeführt wird. Je nachdem, ob eine Nass- oder eine Trockenbearbeitung (MMS-Technologie) gewählt wird, und in Abhängigkeit vom Druck des zur Anwendung kommenden Kühl-/Schmiermittels kann das Differenzmaß der Nenndurchmesser des Führungsleistensatzes einerseits und des in Vorschubrichtung benachbarten Schneidensatzes andererseits variieren. Für einen Nenndurchmesser des Schneidensatzes von beispielsweise 13 mm kann das Maß der Nenndurchmesser-Differenz zwischen 11 und 17 µm liegen.

Für eine besonders gute stabilisierende Wirkung des Führungsleistensatzes, d.h. zur Sicherstellung einer besonders guten Führungsfunktion, ist es von Vorteil, die axiale Länge der Schneideinsätze des Führungsleistensatzes nicht zu klein werden zu lassen. Es hat sich gezeigt, dass es allerdings ohne Weiteres genügt, die axiale Länge auf die Länge des benachbarten Schneidensatzes zu beschränken.

Die erfindungsgemäße Gestaltung des Feinbearbeitungswerkzeugs erlaubt es sogar, das Werkzeug modular aufzubauen, ohne Abstriche bei der Arbeitsgenauigkeit des Werkzeugs zu machen. Auf diese Weise wird die Flexibilität hinsichtlich der Gestaltung des Werkzeugs weiter angehoben.

Ein besonders vorteilhafter Aufbau des Werkzeugs ergibt sich mit der Weiterbildung des Anspruchs 4. Mit diesem Aufbau gelingt es, ein Werkzeug für verschiedenste Anwendungen mit geringem Umrüstaufwand zusammenzustellen. Da in diesem Fall der erste Werkzeugmodul lösbar mit dem weiteren Werkzeugmodul verbunden ist, kommt dem Führungsleistensatz eine besonders wichtige Aufgabe zu, da er in der Lage ist, die durch die Kopplung der Module naturgemäß gegebene Schwächung des Werkzeugs besonders wirksam zu kompensieren.

Es hat sich sogar gezeigt, dass es durch den erfindungsgemäßen Aufbau bzw. durch die erfindungsgemäße Gestaltung und Anordnung des Führungsleistensatzes gelingt, dem Werkzeug im Bereich des vorlaufenden Werkzeugabschnitt zumindest einen weiteren Schneidensatz zu geben, der durch den Führungsleistensatz ebenfalls mit stabilisiert werden kann. Insbesondere dann, wenn dieser weitere Schneidensatz an einem austauschbaren Modul angeordnet ist, kommt dies der Flexibilität bei der Gestaltung des Werkzeugs weiter erheblich zugute.

Vorteilhafterweise werden die Schneideinsätze des Führungsleistensatzes und/oder zumindest eines der vorhandenen Schneidensätze von Schneidplatten gebildet, die eine PKD- (polykristalliner Diamant) -Auflage haben. Derartige PKD bestückte Schneidplatten lassen sich extrem formgenau ausbilden und nehmen verhältnismäßig wenig Bauraum ein, insbesondere dann, wenn sie mit dem Trägerwerkstoff direkt verlötet werden. Es hat sich überraschenderweise gezeigt, dass sich diese PKD bestückten Schneidplatten selbst dann, wenn sie nur eine Stärke im mm-Bereich haben, hervorragend auch für die Funktion im Bereich des Führungsleistensatzes eignen, so dass die oben beschriebenen stabilisierenden Funktionen zuverlässig aufrechterhalten werden.

Wenn die Schneideinsätze des Führungsleistensatzes und/oder zumindest eines der vorhandenen Schneidensätze achsparallel ausgerichtet sind, ergeben sich weitere Vereinfachungen bei der Herstellung des Werkzeugs. Es soll jedoch an dieser Stelle hervorgehoben werden, dass das Werkzeug nicht grundsätzlich gerade genutet sein muß. Es kann vielmehr auch mit Schneiden ausgestattet werden, die zumindest geringfügig in bzw. gegen die Drehrichtung des Werkzeugs angestellt sind.

Die Leistungsfähigkeit des Werkzeugs lässt sich in besonderer Weise durch eine innenliegende Kühl-/Schmiermittelversorgung optimieren. Eine solche innenliegende Kühl-/Schmiermittelversorgung stellt sicher, dass nicht nur die Schneidensätze, sondern auch der Führungsleistensatz kontinuierlich mit ausreichend Kühl-/Schmiermittel versorgt wird, so dass die stabilisierende Funktion des Führungsleistensatzes zuverlässig aufrechterhalten werden kann. Eine derartige innenliegende Kühl-/Schmiermittelversorgung ist insbesondere bei der Trockenbearbeitung, d.h. bei Anwendung der MMS- (Minimalmengenschmierung)-Technologie von besonderem Vorteil.

Vorteilhafterweise wird jedem Schneidensatz eine ausreichende Anzahl von Mündungsöffnungen zugewiesen. Es kann sogar jeder Schneide der Schneideinsätze zumindest eine Mündungsöffnung der Kühl-/Schmiermittelversorgung zugeordnet werden. Da der Führungsleistensatz in der Regel eng benachbart zu dem in Vorschubrichtung des Werkzeugs benachbarten Schneidensatz liegt, genügt es sogar, axial fluchtende Schneideinsätze des Schneidensatzes und des benachbarten Führungsleistensatzes über eine gemeinsame Mündungsöffnung mit Kühl-/Schmiermittel zu versorgen.

Mit der Weiterbildung des Anspruchs 14 ergibt sich eine besonders formstabile Ankopplung des Werkzeugs an eine Werkzeugaufnahme eines Werkzeugsystems, da der Spannflansch neben dem Zentrierfortsatz oder dem Hohlschaftkegel (HSK) die Achsausrichtung des Werkzeugs stabilisiert.

Nachstehend werden anhand schematischer Zeichnungen Ausführungsbeispiele der Erfindung näher erläutert. Es zeigen:
Fig. 1 eine Seitenansicht einer Ausführungsform des mehrschneidigen Bohrungs-Nachbearbeitungswerkzeugs in leicht vergrößerter Ansicht;
Fig. 2 die Ansicht gemäß "II" in Fg. 1;
Fig. 3 in etwas vergrößerter Darstellung die Einzelheit der Schneidensätze des Werkzeugs gemäß Fig. 1;
Fig. 4 eine perspektivische Darstellung des Werkzeugs gemäß der Fign. 1 bis 3;
Fig. 5 in etwas vergrößerter Darstellung eine Einzelheit des Werkzeugs gemäß Fig. 4;
Fig. 6 eine in etwas vergrößerter Darstellung gezeigte Seitenansicht eines beim Werkzeug gemäß Fig. 1 verwendeten Werkzeugmoduls;
Fig. 7 in vergrößerter Darstellung die Ansicht gemäß "VII" in Fig. 6;
Fig. 8 die Schnittansicht gemäß "VIII-VIII" in Fig. 7;
Fig. 9 die Seitenansicht einer weiteren Ausführungsform des Werkzeugs;
Fig. 10 die Ansicht gemäß "X" in Fig. 9; und
Fig. 11 eine perspektivische Ansicht des Werkzeugs gemäß Fig. 9.

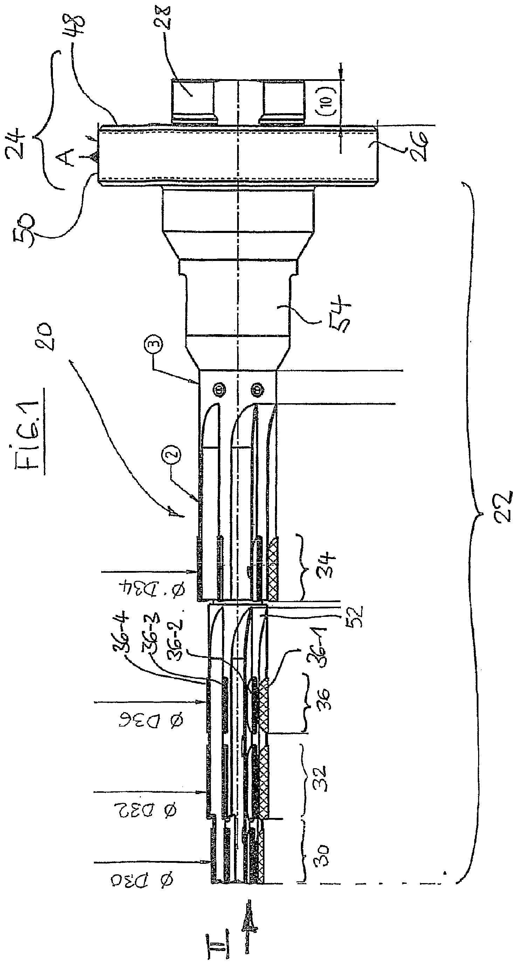

In Fig. 1 ist mit dem Bezugszeichen 20 ein mehrschneidiges spanabhebendes und drehangetriebenes Bohrungs-Nachbearbeitungswerkzeug in der Ausgestaltung als Stufenreibahle bezeichnet. Dieses Werkzeug dient zur Präzisionsbearbeitung gestufter Bohrungen, wie sie beispielsweise in Steuerblockgehäusen von hydraulischen Steuereinrichtungen in der Automobiltechnik zur Aufnahme von Kolbenschiebern benötigt werden. Die Besonderheit dieser Bohrungen besteht darin, dass sie axial verhältnismäßig weit beabstandet sind und äußerste enge Lagetoleranzen haben. Das Werkzeug muss deshalb verhältnismäßig tief in das Werkstück eingefahren werden und trotzdem in der Lage sein, Bohrungen höchster Oberflächengüte und Maßhaltigkeit herzustellen.

Das Werkzeug 20 hat einen Schaft 22 und einen Spannabschnitt 24, der im gezeigten Ausführungsbeispiel einen Spannflansch 26 und einen Zentrierungsfortsatz 28 aufweist. Die Stufenreibahle gemäß Fig. 1 hat beispielsweise eine Länge von ca. 160 mm und einen Schaftdurchmesser in der Größenordnung von etwa 16 mm. Die Reibahle ist im gezeigten Ausführungsbeispiel mit drei Schneidensätzen 30, 32 und 34 ausgestattet, wobei der erste Schneideneinsatz 30 einen Nenndurchmesser D30, der zweite Schneidensatz 32 einen etwas größeren Nenndurchmesser D32 und der dritte Schneidensatz 34 einen wiederum größeren Nenndurchmesser D34 hat. Das Maß D30 beträgt beispielsweise etwa 11 mm, das Maß D32 etwa 13 mm und das Maß D34 etwa 17 mm. Sämtliche Nenndurchmesser sind äußerst eng toleriert, beispielsweise zwischen 0 und -0,003 mm. Der axiale Abstand zwischen dem ersten Schneidensatz 30 und dem dritten Schneidensatz 34 beträgt beispielsweise etwa 60 mm, der Abstand zwischen dem zweiten Schneidensatz 32 und dem dritten Schneidensatz 34 etwa 30 mm.

Damit die mit dem Werkzeug herzustellenden gestuften Bohrungen mit größtmöglicher Präzision und Oberflächengüte hergestellt werden können, befindet sich zwischen dem zweiten Schneidensatz 32 und dem dritten Schneidensatz 34 ein Stützleistensatz 36, der einen Nenndurchmesser D36 hat, der geringfügig kleiner ist als der Nenndurchmesser D32 des zweiten Schneidensatzes 32. Bei einem Nenndurchmesser des zweiten Schneidensatzes D32 von etwa 13 mm ist der Nenndurchmesser D36 des Führungsleistensatzes 36 um 14 ± 3 µm kleiner als der Nenndurchmesser D32 des in Vorschubrichtung des Werkzeugs benachbarten Schneidensatzes 32.

Der Stützleistensatz ist von Schneideinsätzen 36-1, 36-2 bis 36-n gebildet, wobei n der Anzahl der über den Umfang gleichmäßig verteilten Schneiden der Schneidensätze 30, 32 und 34 entspricht. Vorzugsweise sind die Schneideinsätze 36-1 bis 36-n zylindrisch geschliffen, wobei vorzugsweise an der vorlaufenden Kante eine Rundphase angeschliffen ist.

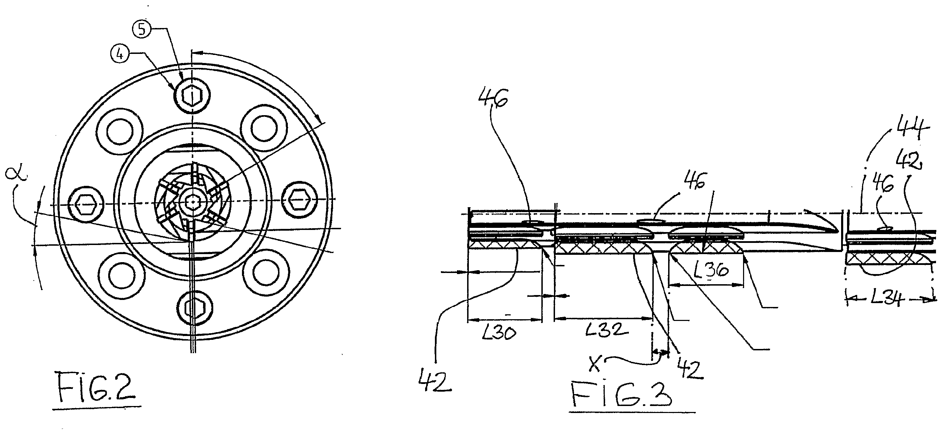

Es soll an dieser Stelle bereits hervorgehoben werden, dass der zylindrische Anschliff nicht unbedingt erforderlich ist. Es ist gleichermaßen möglich, die Schneideinsätze 36-1 bis 36-n schneidenähnlich anzuschleifen oder aber derart, dass ein negativer Nebenschneiden-Freiwinkel entsteht. Entscheidend ist allerdings, dass die Positionierung der Schneideinsätze 36-1 bis 36-n und Bearbeitung bzw. Formgebung so exakt ist, dass sich über die gesamte Länge L36 (vgl. Fig. 3) ein homogener Schmierspalt ergibt, über den das Werkzeug zusätzlich und wirksam geführt werden kann.

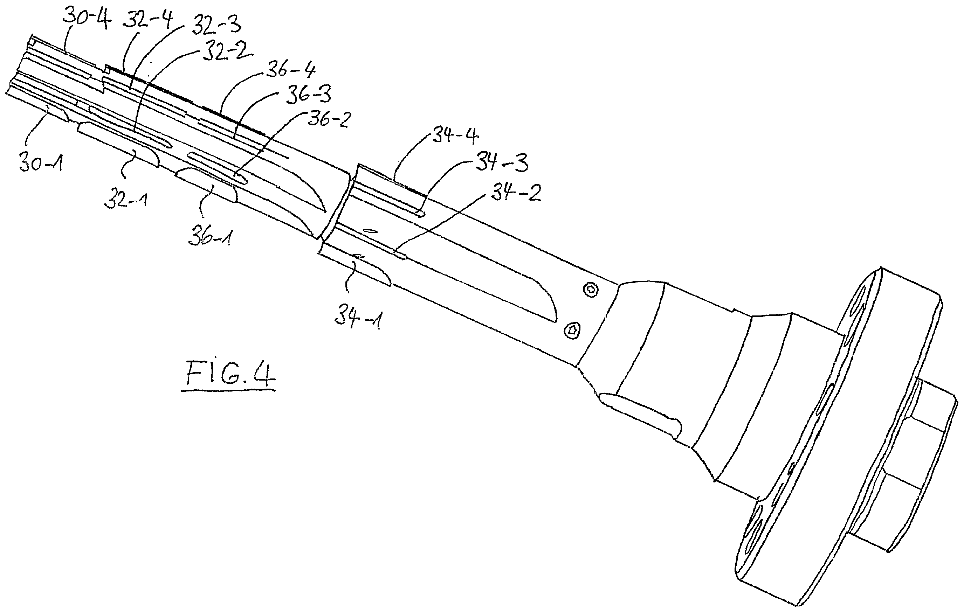

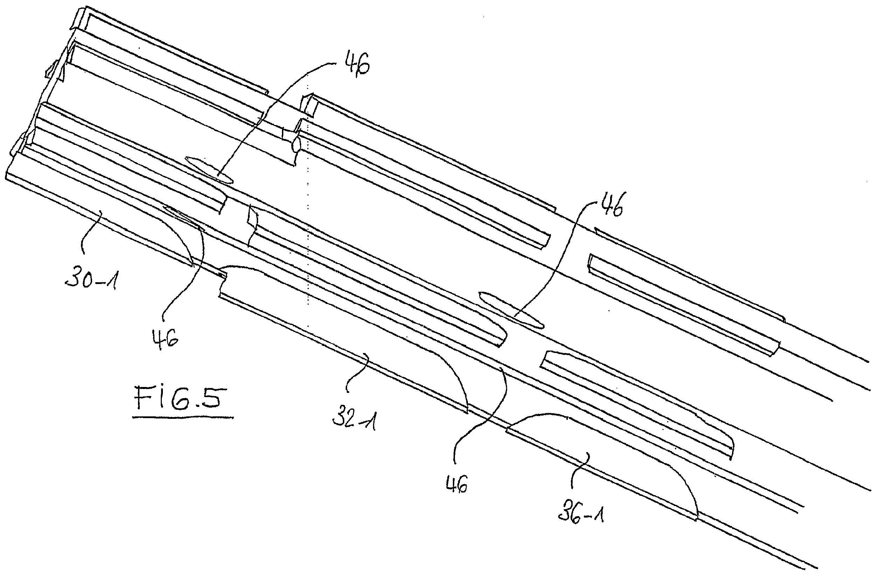

Bei der Ausgestaltung des Werkzeugs gemäß Fign. 1 bis 5 sind die Schneidensätze 30, 32 und 34 jeweils mit sechs Schneiden ausgestattet, die zueinander im Winkelabstand von jeweils 60° stehen. Da auch die Schneideinsätze 36-1 bis 36-6 mit den Schneiden der Schneidensätze 30, 32 und 34 axial fluchten, liegt jeder Schneide der Schneidensätze, insbesondere des Schneidensatzes 32 diametral und leicht axial versetzt ein stabilisierender Schmierspalt des Stützleistensatzes 36 gegenüber, so dass Schnittkraft bedingten Ausweichbewegungen des Werkzeugs wirksam entgegengewirkt werden kann.

Bei dem gezeigten Ausführungsbeispiel sind auch die Schneidensätze 30, 32 und 34 mit Schneideinsätzen bestückt, die ähnlich aufgebaut sind wie die Schneideinsätze 36-1 bis 36-n des Stützleistensatzes 36. Im Einzelnen sind diese Schneideinsätze 30-1 bis 30-n, 32-1 bis 32-n und 34-1 bis 34-n von PKD (polykristalliner Diamant) bestückten Schneidplatten gebildet, bei denen ein Stahl-Trägerteil von etwa 0,5 mm Dicke eine PKD-Auflage von 0,5 mm trägt.

Die Schneideinsätze 30-1 bis 30-6, 32-1 bis 32-6 und 34-1 bis 34-6 sind jeweils in einer Tasche 40 im Werkzeugschaft 22 so aufgenommen, dass die betreffende Nebenschneide 42 in einer durch die Werkzeugachse 44 verlaufenden Ebene liegt. Diese geometrische Anordnung lässt sich am besten aus der Fig. 2 erkennen, aus der darüber hinaus der Freiwinkel a der Schneiden bzw. Schneideinsätze des Schneidensatzes 30, 32 und 34 ersichtlich ist.

Aus der Fig. 3 geht hervor, dass die Schneideinsätze des Schneidensatzes 30, 32 und 34 ebenso wie die schneidenartig gestalteten Stützleisten 36-1 bis 36-6 am axialen vorderen und hinteren Ende angefast sind. Der Fig. 3 ist ferner zu entnehmen, dass der axiale Abstand X zwischen den Schneideinsätzen des Schneidensatzes 32 und den Stützleisten des Stützleistensatzes 36 nur einige mm, beispielsweise zwischen 2 und 3 mm beträgt, und dass die Länge L36 des Stützleistensatzes 36 in der Größenordnung der Länge L32 des in Vorschubrichtung des Werkzeugs 20 benachbarten Schneidensatzes 32 liegt.

Bei dem gezeigten Ausführungsbeispiel beträgt die axiale Länge L32 des Schneidensatzes 32 beispielsweise 16 mm, während die axiale Länge L36 des Stützleistensatzes 36 im Wesentlichen 12 mm beträgt.

Der die Schneidensätze 30, 32 und 34 sowie den Stützleistensatz 36 tragende Werkzeugschaft 22 ist aus einem Werkzeugstahl gefertigt. Als Material für die Trägerplatte der Schneideinsätze 30-1 bis 30-6, 32-1 bis 32-6, 34-1 bis 34-6 sowie für die Stützleisten 36-1 bis 36-6 kommt ein Vergütungsstahl wie z. B. 50CrV4 zum Einsatz.

Das Werkzeug 20 verfügt über eine Kühl-/Schmiermittelversorgung, und zwar in der Weise, dass die Versorgung durch innenliegende Kühl-/Schmiermittelkanäle erfolgt. Mit dem Bezugszeichen 46 sind Mündungsöffnungen von Stichkanälen bezeichnet, die schräg zur Achse 44 des Werkzeugs 20 von einer zentrischen Innenbohrung des Werkzeugs ausgehend verlaufen und in der Nähe der Schneideinsätze in die Taschen 40 des Werkzeugschafts 22 münden. Durch geeignete Wahl der dem Schneidensatz 32 zugeordneten Mündungsöffnungen 46 gelingt es, das aus diesen Mündungsöffnungen austretende Kühl-/Schmiermittel zur Ausbildung eines effektiven Schmierfilms im Bereich des Stützleistensatzes 36 heranzuziehen.

Aus den Fign. 1 bis 3 geht ferner hervor, dass sämtliche Nenndurchmesser der Schneidensätze einerseits und auch des Stützleistensatzes 36 andererseits derart bearbeitet sind, dass eine auf eine Stirnfläche 48 des Spannflanschs 26 bezogene Laufgenauigkeit mit einer Toleranz von 0,003 mm eingehalten wird. Entsprechendes gilt für die Laufgenauigkeit dieser Nenndurchmesser bezüglich einer Zylinderoberfläche 50 des Spannflanschs 26.

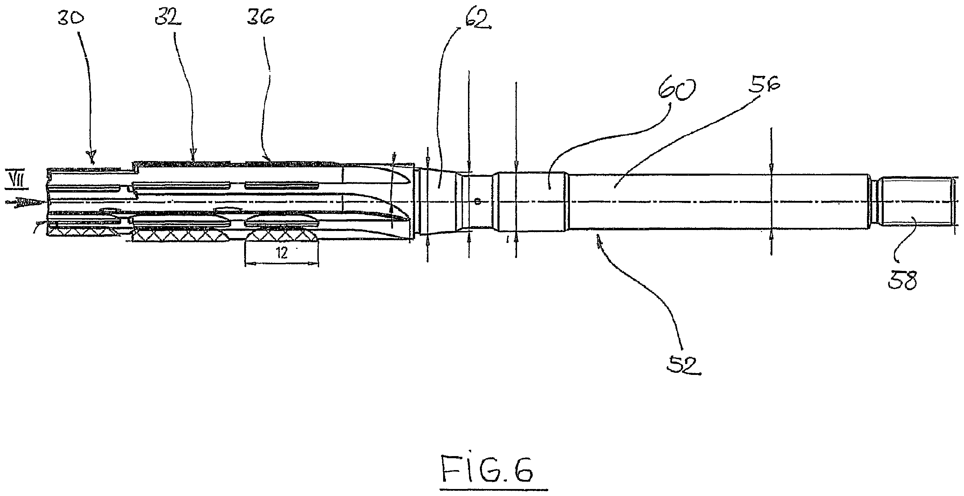

Das in den Fign. 1 bis 3 gezeigte Werkzeug 20 ist darüber hinaus modular aufgebaut, was im Folgenden unter Bezugnahme auf die Fign. 6 bis 8 näher erläutert werden soll.

Wie ersichtlich, sind die Schneidensätze 30 und 32 zusammen mit dem Stützleistensatz 36 an einem ersten Werkzeugmodul 52 ausgebildet, der zentriert, axial- und drehfest mit einem zweiten Werkzeugmodul 54 gekoppelt ist. Der die Schneidensätze 30 und 32 sowie den Stützleistensatz 36 tragende erste Werkzeugmodul 52 - der in Fig. 6 dargestellt ist - hat eine Schaftverlängerung 56, die über einen Gewindeabschnitt 58 mit dem zweiten Werkzeugmodul 54 verschraubt ist. Die Zentrierung der beiden Werkzeugmodule 52 und 54 zueinander erfolgt über zwei Passungsflächenpaare. Zum einen wirkt ein zylindrischer Abschnitt 60 mit einer komplementären, vorzugsweise geschliffenen Innenausnehmung im zweiten Werkzeugmodul 54 zusammen. Zum anderen erfolgt eine zentrierte Einspannung über einen Konusabschnitt 62. Der erste Werkzeugmodul 52 hat eine nicht näher dargestellte zentrale Bohrung für die Kühl-/Schmiermittelversorgung der Schneidensätze 30, 32 und 34 sowie des Stützleistensatzes 36.

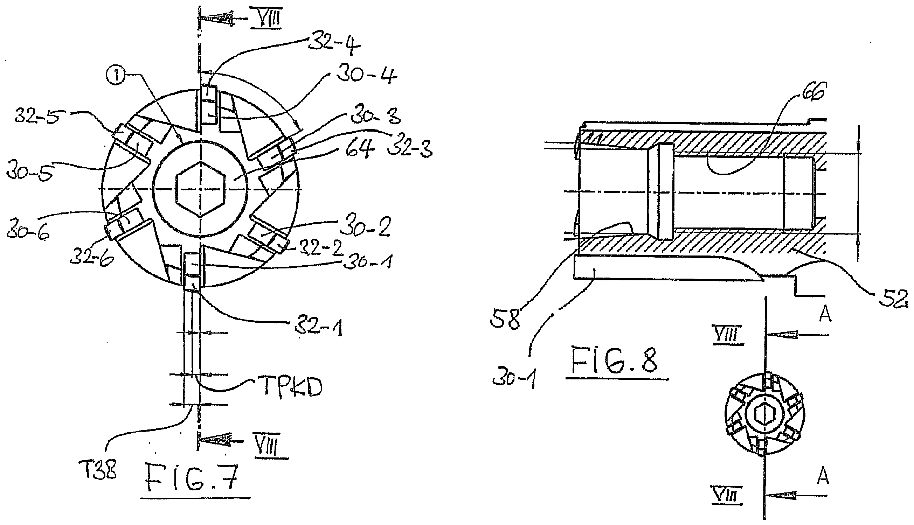

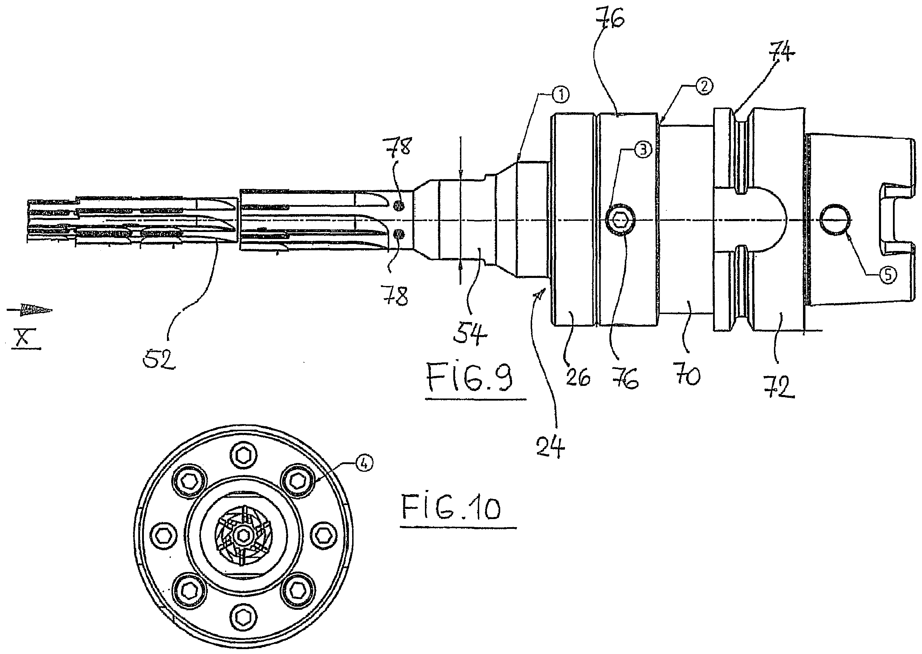

Eine Besonderheit des ersten Werkzeugmoduls 52 ist den Fign. 8 und 9 zu entnehmen. In der Draufsicht gemäß Fig. 7 ist eine stirnseitig in den Werkzeugmodul 52 einschraubbare Spreizschraube 64 erkennbar, die in ein Innengewinde 66 des Werkzeugmoduls 52 schraubbar ist und sich dabei mit einem Außenkonus an einer konischen Gegen-Passungsfläche 68 abstützt. Auf diese Weise können die Schneiden 30-1 bis 30-6 radial feinjustiert werden.

Der Ansicht gemäß Fig. 7 kann schließlich noch entnommen werden, dass die Schneideinsätze 30-1 bis 30-n des ersten Schneidensatzes 30 mit den Schneideinsätzen 32-1 bis 32-n exakt fluchten und dass sie im gleichmäßigen Umfangsabstand zueinander angeordnet sind.

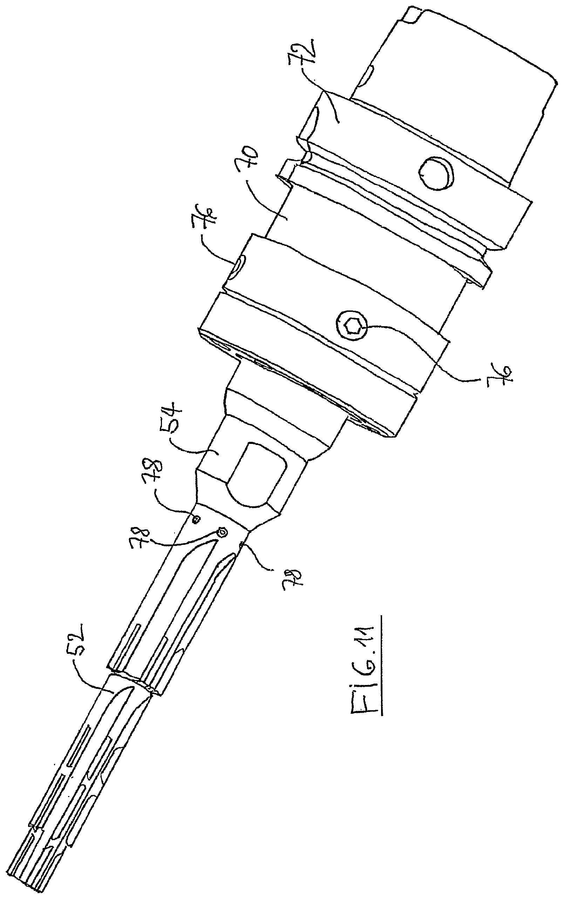

In den Fign. 9 bis 11 ist ein komplett mehrschneidiges und spanabhebendes Bohrungs-Nachbearbeitungswerkzeug in der Ausgestaltung als Stufen-Reibahle dargestellt, wobei die Werkzeugmodule 52 und 54 über den Spannabschnitt 24 mit Spannflansch 26 an zwei weitere Module 70 und 72 angekoppelt sind. Der Modul 70 stellt einen Ausgleichsadapter und der Modul 72 einen sogenannten HSK- (Hohlschaftkegel) Adapter dar, über den das Werkzeug 20 an eine Werkzeugaufnahme einer Maschinenspindel angekoppelt werden kann. Das Bezugszeichen 74 bezeichnet eine Greiferrille für den Eingriff eines Werkzeugwechselsystems.

Mit dem Bezugszeichen 76 sind Gewindestifte bezeichnet, über die eine Auswuchtung des Werkzeugs vorgenommen werden kann. Das Bezugszeichen 78 bezeichnet weitere Gewindestifte am zweiten Werkzeugmodul 54, über die eine Feinauswuchtung des Werkzeugs durchgeführt werden kann.

Selbstverständlich sind Abweichungen von den beschriebenen Ausführungsbeispielen möglich, ohne den Grundgedanken der Erfindung zu verlassen. So kann beispielsweise die im Wesentlichen axiale Fluchtung zwischen den Schneiden des Schneidensatzes 32 und des Stützleistensatzes 36 auch dann eingehalten werden, wenn die Schneiden mit leichtem Links- oder Rechtsdrall ausgeführt werden, d.h. wenn der Spanwinkel der Nebenschneide vorzugsweise geringfügig von 0° abweicht. Anstelle der Geradnutung des Werkzeugs sind dann auch die Nutenzur Achse leicht positiv oder negativ angestellt.

Die Schneidensätze 30, 32 und 34 sind auch nicht notwendigerweise so aufgebaut, dass die Schneiden an Schneideinsätzen ausgebildet sind. Die Schneiden können auch einstückig mit einem Schneidenträger ausgebildet sein, der dann vorzugsweise aus einem Hartstoff, wie z. B. Vollhartmetall besteht.

Als Material für den ersten Werkzeugmodul 52 und/oder den zweiten Werkzeugmodul 54 können auch andere Materialien, insbesondere auch unterschiedliche Materialien eingesetzt werden.

Bei den beschriebenen Ausführungsbeispielen sind die Stützleisten des Stützleistensatzes 36 zylindrisch angeschliffen. Dieser Anschliff kann auch dahingehend modifiziert werden, dass sich in Drehrichtung des Werkzeugs eine Verbreiterung des Schmierspalts ergibt.

Der Anschliff der Schneideinsätze der Schneidensätze 30, 32 und 34 wurde nicht im Einzelnen beschrieben. Hier können gängige Anschliffe zur Anwendung kommen, die bei Hochleistungs-Reibahlen in der Regel verwendet werden und auf deren detaillierte Beschreibung hier verzichtet werden kann. Es kann aber beispielsweise von Vorteil sein, die PKD bestückten Schneideinsätze in axialer Richtung geringfügig im Durchmesser über die Länge zu verjüngen, und zwar im 1/1000-stel-Bereich, beispielsweise um bis zu 12 bis 16 µm. Auch ist es von Vorteil, die PKD bestückten Schneideinsätze an den Kanten zu verrunden bzw. mit einer Rundfase zu versehen.

Anstatt jeder Schneide der Schneidensätze 30, 32, 34, 36 eine eigene Mündungsöffnung der Kühl-/Schmiermittelversorgung zuzuordnen, kann es im Einzelfall auch genügen, mehrere Schneiden über eine Mündungsöffnung zu versorgen.

Das vorstehend beschriebene Bohrungs-Nachbearbeitungswerkzeug in der Ausgestaltung als Stufen-Reibahle wurde vorstehend als drehangetriebenes Werkzeug beschrieben. Es ist jedoch gleichermaßen möglich, das Werkzeug stehend einzusetzen und die Zerspanung dadurch vorzunehmen, dass das Werkstück in Drehbewegung versetzt wird.

Das vorstehend beschriebene Werkzeug hat sechs über den Umfang gleichmäßig verteilte Schneiden. Die Anzahl der Schneiden kann jedoch in weiten Grenzen variiert werden, wobei allerdings vorteilhafter Weise eine gerade Anzahl von Schneiden gewählt wird. Die Erfindung kann die eingangs beschriebenen Vorteile im Übrigen auch dann noch bereitstellen, wenn die Winkelabstände der über den Umfang verteilten Schneiden nicht exakt gleich groß sind.

Vorstehend wurden Ausführungsformen von Werkzeugen beschrieben, die zur Bearbeitung von gestuften Bohrungen in einem Arbeitsgang dienen. Die Erfindung kann jedoch gleichermaßen alle Vorteile dann entfalten, wenn lediglich ein einziger Schneidensatz vorhanden ist, dem axial versetzt ein erfindungsgemäß gestalteter Führungsleistensatz zugeordnet wird.

## Patentansprüche

1. Mehrschneidiges spanabhebendes Bohrungs-Nachbearbeitungswerkzeug bzw. -Feinbearbeitungswerkzeug, insbesondere Reibahle, zur Bearbeitung tief liegender, insbesondere gestufter Bohrungen, wie z.B. von Bohrungen zur Aufnahme von Hydraulik-Kolbenschiebern, mit einem ersten Schneidensatz (32) mit vorbestimmtem Nenndurchmessermaß (D32) und über den Umfang im Wesentlichen gleichmäßig verteilten Schneiden (32-1 bis 32-n), wobei in Vorschubrichtung hinter dem ersten Schneidensatz (32) ein Führungsleistensatz (36) in Form von vorzugsweise zylindrisch geschliffenen Einsätzen (36-1 bis 36-n) liegt, der Führungsleistensatz (36) von Einsätzen (36-1 bis 36-n) gebildet ist, die hochpräzise und derart positioniert sind, dass sie jeweils mit den Schneiden (32-1 bis 32-n) des ersten Schneidensatzes (32) axial fluchten **dadurch gekennzeichnet dass** die Einsätzen (36-1 bis 36-n) ein Nenndurchmessermaß (D36) haben, das sich vom Nenndurchmessermaß (D32) des ersten Schneidensatzes (32) um eine solche Größe unterscheidet, dass sich im Einsatz des Werkzeugs zwischen jedem Einsatz (36-1 bis 36-n) und der vom ersten Schneidensatz (32) bearbeiteten Bohrungswandung ein Schmierspalt einstellen kann, wodurch jede Schneide (32-1 bis 32-n) des ersten Schneidensatzes (32) jeweils über einen diametral und leicht axial versetzten Einsatz (36-1 bis 36-n) und den sich einstellenden Schmierspalt stabilisierbar ist,
wobei das Maß, um das das Nenndurchmessermaß (D36) des Führungsleistensatzes (36) kleiner ist als das Nenndurchmessermaß (D32) des ersten Schneidensatzes (32), im Bereich zwischen 0,0006 bis 0,0016 x D liegt.

2. Bohrungs-Nachbearbeitungswerkzeug nach Anspruch 1, **dadurch gekennzeichnet, dass** die axiale Länge (L36) der Einsätze (36-1 bis 36-n) des Führungsleistensatzes (36) in der Größenordnung der axialen Länge (L32) des ersten Schneidensatzes (32) liegt.

3. Bohrungs-Nachbearbeitungswerkzeug nach Anspruch 1 oder 2, **dadurch gekennzeichnet, dass** es modular aufgebaut ist.

4. Bohrungs-Nachbearbeitungswerkzeug nach Anspruch 3, **dadurch gekennzeichnet, dass** der Führungsleistensatz (36) und der in Vorschubrichtung des Werkzeugs benachbarte ersten Schneidensatz (32) an einem ersten Werkzeugmodul (52) ausgebildet sind, der lösbar mit einem zweiten Werkzeugmodul (54) verbunden ist, welcher einen Spannabschnitt (24, 26, 28) zur zentrierten Ankopplung an eine Werkzeugaufnahme oder einen Modul (70, 72) eines Werkzeugsystems hat.

5. Bohrungs-Nachbearbeitungswerkzeug nach Anspruch 3 oder 4, **dadurch gekennzeichnet, dass** der erste Werkzeugmodul (52) einen ersten (32) und einen zweiten (30) Schneidensatz mit unterschiedlichem Nenndurchmessermaß (D30, D32) hat.

6. Bohrungs-Nachbearbeitungswerkzeug nach Anspruch 4 oder 5, **dadurch gekennzeichnet, dass** der zweite Werkzeugmodul (54) einen dritten Schneidensatz (34) trägt, dessen Nenndurchmessermaß (D34) größer ist als das des in Vorschubrichtung des Werkzeugs benachbarten ersten Schneidensatzes (32).

7. Bohrungs-Nachbearbeitungswerkzeug nach einem der Ansprüche 1 bis 6, **dadurch gekennzeichnet, dass** der erste Schneidensatz (32) bzw. die zweiten und dritten Schneidensätze (30, 34), sowie der Führungsleistensatz (36) jeweils 6 über den Umfang gleichmäßig verteilte Schneiden haben.

8. Bohrungs-Nachbearbeitungswerkzeug nach einem der Ansprüche 1 bis 7, **dadurch gekennzeichnet, dass** die Einsätze (36-1 bis 36-n) des Führungsleistensatzes (36) und/oder zumindest eines der Schneidensätze (30, 32, 34) von PKD (Polykristalliner Diamant)-bestückten Schneidplatten (38) gebildet sind.

9. Bohrungs-Nachbearbeitungswerkzeug nach Anspruch 8, **dadurch gekennzeichnet, dass** die Schneidplatten (38) eine Stärke (T38) im Bereich zwischen 0,75 und 1,5 mm haben, wobei die Stärke (TPKD) der PKD-Auflage etwa 0,5 mm beträgt.

10. Bohrungs-Nachbearbeitungswerkzeug nach einem der Ansprüche 1 bis 9, **dadurch gekennzeichnet, dass** die Einsätze (36-1 bis 36-n) des Führungsleistensatzes (36) und/oder zumindest eines der Schneidensätze (30, 32, 34) achsparallel ausgerichtet sind.

11. Bohrungs-Nachbearbeitungswerkzeug nach einem der Ansprüche 1 bis 10, **gekennzeichnet durch** eine innenliegende Kühl-/Schmiermittelversorgung.

12. Bohrungs-Nachbearbeitungswerkzeug nach Anspruch 11, **dadurch gekennzeichnet, dass** den Schneiden (42) der jeweiligen Schneidensätze (30, 32, 34) zumindest eine, vorzugsweise mehrere Mündungsöffnungen (46) der Kühl-/Schmiermittelversorgung zugeordnet sind.

13. Bohrungs-Nachbearbeitungswerkzeug nach einem der Ansprüche 4 bis 12, **dadurch gekennzeichnet, dass** der Spannabschnitt (24) zur zentrierten Ankopplung an eine Werkzeugaufnahme eines Werkzeugsystems oder Werkzeugsystem-Moduls einen Zentrierfortsatz oder Hohlschaftkegel (HSK) und einen auf der Zentrierachse (44) senkrecht stehenden Spannflansch (26) aufweist.

14. Bohrungs-Nachbearbeitungswerkzeug nach einem der Ansprüche 1 bis 13, **dadurch gekennzeichnet, dass** der Nebenschneiden-Freiwinkel der Einsätze (36-1 bis 36-n) des Führungsleistensatzes (36) etwa 0° beträgt.

15. Bohrungs-Nachbearbeitungswerkzeug nach einem der Ansprüche 1 bis 14, **dadurch gekennzeichnet, dass** der axiale Abstand (X) zwischen dem Führungsleistensatz (36) und dem in Vorschubrichtung benachbarten Schneidensatz (32) im Bereich zwischen 0,1 und 0,3 x D, vorzugsweise zwischen 0, 15 und 0, 25 x D liegt, wobei D den Nenndurchmesser des Schneidensatzes (32) bezeichnet.

16. Bohrungs-Nachbearbeitungswerkzeug nach einem der Ansprüche 1 bis 15, **dadurch gekennzeichnet, dass** in Vorschubrichtung hinter dem Führungsleistensatz (36) ein weiterer dritter Schneidensatz (34) mit größerem Nenndurchmessermaß (D34) vorgesehen ist.

17. Bohrungs-Nachbearbeitungswerkzeug nach einem der Ansprüche 1 bis 16, **dadurch gekennzeichnet, dass** das Maß, um das das Nenndurchmessermaß (D36) des Führungsleistensatzes (36) kleiner ist als das Nenndurchmessermaß (D32) des ersten Schneidensatzes (32), im Bereich zwischen 0,0008 bis 0,0014 x D liegt.

## Claims

1. A multi-blade cutting and drilling finishing tool or fine machining tool, in particular a reamer, for machining deep, in particular stepped bores, e.g., bores for accommodating hydraulic piston slide valves, with a first blade set (32) having a predetermined nominal diameter measure (D32) and blades (32-1 to 32-n) distributed essentially uniformly over the circumference, wherein the first blade set (32) has lying behind it in the advancing direction a guiding strip set (36) in the form of preferably cylindrically ground inserts (36-1 to 36-n), **characterized in that**
the guiding strip set (36) is formed by inserts (36-1 to 36-n) which are very accurately positioned such that they are each axially aligned with the blades (32-1 to 32-n) of the first blade set (32) and have a nominal diameter measure (D36) that differs from the nominal diameter measure (D32) of the first blade set (32) by a value such that, when using the tool, a lubrication gap can form between each insert (36-1 to 36-n) and the bore wall machined by the first blade set (32), whereby each blade (32-1 to 32-n) of the first blade set (32) can be respectively stabilized via an insert (36-1 to 36-n) which is diametrically and slightly axially offset and via the lubrication gap, which forms in use of the tool wherein the measure by which the nominal diameter measure (D36) of the guiding strip set (36) is smaller than the nominal diameter measure (D32) of the first blade set (32) lies within a range of between 0.0006 and 0.0016×D.

2. The drilling finishing tool according to claim 1, **characterized in that** the axial length (L36) of the inserts (36-1 to 36-n) of the guiding strip set (36) lies in the order of the axial length (L32) of the first blade set (32).

3. The drilling finishing tool according to claim 1 or 2, **characterized in that** it is modular in design.

4. The drilling finishing tool according to claim 3, **characterized in that** the guiding strip set (36) and the adjacent first blade set (32) in the advancing direction of the tool are formed on a first tool module (52) that is detachably connected with a second tool module (54), which has a clamping section (24, 26, 28) for centered coupling to a tool holder or module (70, 72) of a tool system.

5. The drilling finishing tool according to claim 3 or 4, **characterized in that** the first tool module (52) has a first (32) and a second blade set (30) with varying nominal diameter measure (D30, D32).

6. The drilling finishing tool according to claim 4 or 5, **characterized in that** the second tool module (54) carries a third blade set (34) whose nominal diameter measure (D34) is greater than that of the adjacent first blade set (32) in the advancing direction of the tool.

7. The drilling finishing tool according to one of the claims 1 to 6, **characterized in that** the first blade set (32) or the second and third blade sets (30, 34) as well as the guiding strip set (36) each have 6 blades uniformly distributed over the circumference.

8. The drilling finishing tool according to one of the claims 1 to 7, **characterized in that** the inserts (36-1 to 36-n) of the guiding strip set (36) and/or at least one of the blade sets (30, 32, 34) are comprised of PCD (polycrystalline diamond)-fitted cutting tips (38).

9. The drilling finishing tool according to claim 8, **characterized in that** the cutting tips (38) have a thickness (T38) ranging between 0.75 and 1.5 mm, wherein the thickness (TPCD) of the PCD plating measures about 0.5 mm.

10. The drilling finishing tool according to one of the claims 1 to 9, **characterized in that** the inserts (36-1 to 36-n) of the guiding strip set (36) and/or at least one of the blade sets (30, 32, 34) are aligned axially parallel.

11. The drilling finishing tool according to one of the claims 1 to 10, **characterized by** an internal coolant/lubricant supply.

12. The drilling finishing tool according to claim 11, **characterized in that** at least one, preferably several openings (46) of the coolant/lubricant supply are allocated to the blades (42) of the respective blade sets (30, 32, 34).

13. The drilling finishing tool according to one of the claims 4 to 12, **characterized in that** the clamping section (24) exhibits a centering extension or hollow shank taper (HST) and a clamping flange (26) running perpendicularly to the centering axis (44) for centered coupling to a tool holder of a tool system or tool system module.

14. The drilling finishing tool according to one of the claims 1 to 13, **characterized in that** the secondary cutting edge clearance angle of the inserts (36-1 to 36-n) of the guiding strip set (36) measures about 0°.

15. The drilling finishing tool according to one of the claims 1 to 14, **characterized in that** the axial distance (X) between the guiding strip set (36) and adjacent blade set (32) in the advancing direction lies between 0.1 and 0.3×D, preferably between 0.15 and 0.25×D, wherein D denotes the nominal diameter of the blade set (32).

16. The drilling finishing tool according to one of the claims 1 to 15, **characterized in that** another third blade set (34) with a larger nominal diameter measure (D34) is provided behind the guiding strip set (36) in the advancing direction.

17. The drilling finishing tool according to one of the claims 1 to 16, **characterized in that** the measure by which the nominal diameter measure (D36) of the guiding strip set (36) is smaller than the nominal diameter measure (D32) of the first blade set (32) lies within a range of between 0.0008 and 0.0014×D.

## Revendications

1. Outil de finition ou outil d'usinage de précision d'alésage par enlèvement de copeaux à plusieurs tranchants, en particulier alésoir, pour le traitement d'alésages profonds, en particulier étagés, comme par exemple des alésages destinés à recevoir des tiroirs de pistons hydrauliques, avec un premier jeu de tranchants (32) avec une dimension de diamètre nominal prédéterminée (D32) et des tranchants (32-1 à 32-n) répartis de manière sensiblement uniforme sur la périphérie, dans lequel un jeu de barres de guidage (36) sous forme d'inserts (36-1 à 36-n) taillés de préférence de manière cylindrique se trouve dans la direction d'avance derrière le premier jeu de tranchants (32), **caractérisé en ce que** le jeu de barres de guidage (36) est formé d'inserts (36-1 à 36-n), qui sont d'une grande précision et positionnés de telle manière qu'ils s'alignent axialement respectivement avec les tranchants (32-1 à 32-n) du premier jeu de tranchants (32) et ont une dimension de diamètre nominal (D36), qui se distingue de la dimension de diamètre nominal (D32) du premier jeu de tranchants (32) d'une telle grandeur qu'une fente de lubrification peut se former dans l'insert de l'outil entre chaque insert (36-1 à 36-n) et la paroi d'alésage traitée par le premier jeu de tranchants (32), ce par quoi chaque tranchant (32-1 à 32-n) du premier jeu de tranchants (32) peut être stabilisé respectivement via un insert (36-1 à 36-n) décalé diamétralement et légèrement axialement et la fente de lubrification se formant, dans lequel la valeur de laquelle la dimension de diamètre nominal (D36) du jeu de barres de guidage (36) est inférieure à la dimension de diamètre nominal (D32) du premier jeu de tranchants (32) est comprise dans la plage entre 0,0006 à 0,0016 x D.

2. Outil de finition d'alésage selon la revendication 1, **caractérisé en ce que** la longueur axiale (L36) des inserts (36-1 à 36-n) du jeu de barres de guidage (36) est dans l'ordre de grandeur de la longueur axiale (L32) du premier jeu de tranchants (32).

3. Outil de finition d'alésage selon la revendication 1 ou 2, **caractérisé en ce qu'**il a une structure modulaire.

4. Outil de finition d'alésage selon la revendication 3, **caractérisé en ce que** le jeu de barres de guidage (36) et le premier jeu de tranchants (32) adjacent dans la direction d'avance de l'outil sont réalisés au niveau d'un premier module d'outil (52), qui est relié de manière amovible à un deuxième module d'outil (54), lequel a une section de serrage (24, 26, 28) pour le couplage centré à une réception d'outil ou un module (70, 72) d'un système d'outil.

5. Outil de finition d'alésage selon la revendication 3 ou 4, **caractérisé en ce que** le premier module d'outil (52) a un premier (32) et un deuxième (30) jeu de tranchants avec une dimension de diamètre nominal (D30, D32) différente.

6. Outil de finition d'alésage selon la revendication 4 ou 5, **caractérisé en ce que** le deuxième module d'outil (54) porte un troisième jeu de tranchants (34), dont la dimension de diamètre nominal (D34) est supérieure à celle du premier jeu de tranchants (32) adjacent dans la direction d'avance de l'outil.

7. Outil de finition d'alésage selon l'une quelconque des revendications 1 à 6, **caractérisé en ce que** le premier jeu de tranchants (32) ou les deuxième et troisième jeux de tranchants (30, 34), ainsi que le jeu de barres de guidage (36) ont respectivement 6 tranchants répartis de manière uniforme sur la périphérie.

8. Outil de finition d'alésage selon l'une quelconque des revendications 1 à 7, **caractérisé en ce que** les inserts (36-1 à 36-n) du jeu de barres de guidage (36) et/ou au moins un des jeux de tranchants (30, 32, 34) sont formés de plaques de coupe à PKD (diamant polycristallin) (38).

9. Outil de finition d'alésage selon la revendication 8, **caractérisé en ce que** les plaques de coupe (38) ont une épaisseur (T38) dans la plage entre 0,75 et 1,5 mm, dans lequel l'épaisseur (TPKD) de la couche PKD est d'environ 0,5 mm.

10. Outil de finition d'alésage selon l'une quelconque des revendications 1 à 9, **caractérisé en ce que** les inserts (36-1 à 36-n) du jeu de barres de guidage (36) et/ou au moins un des jeux de tranchants (30, 32, 34) sont orientés parallèlement à l'axe.

11. Outil de finition d'alésage selon l'une quelconque des revendications 1 à 10, **caractérisé par** une alimentation en réfrigérant/lubrifiant située à l'intérieur.

12. Outil de finition d'alésage selon la revendication 11, **caractérisé en ce qu'**au moins une, de préférence plusieurs ouvertures débouchantes (46) de l'alimentation en réfrigérant/lubrifiant sont associées aux tranchants (42) des jeux de tranchants (30, 32, 34) respectifs.

13. Outil de finition d'alésage selon l'une quelconque des revendications 4 à 12, **caractérisé en ce que** la section de serrage (24) pour le couplage centré à une réception d'outil d'un système d'outil ou module de système d'outil présente un prolongement de centrage ou cône creux (HSK) et une bride de serrage (26) verticalement debout sur l'axe de centrage (44).

14. Outil de finition d'alésage selon l'une quelconque des revendications 1 à 13, **caractérisé en ce que** l'angle de dépouille de tranchants secondaires des inserts (36-1 à 36-n) du jeu de barres de guidage (36) est d'environ 0°.

15. Outil de finition d'alésage selon l'une quelconque des revendications 1 à 14, **caractérisé en ce que** la distance axiale (X) entre le jeu de barres de guidage (36) et le jeu de tranchants (32) adjacent dans la direction d'avance est dans la plage entre 0,1 et 0,3 x D, de préférence entre 0,15 et 0,25 x D, dans lequel D désigne le diamètre nominal du jeu de tranchants (32).

16. Outil de finition d'alésage selon l'une quelconque des revendications 1 à 15, **caractérisé en ce qu'**un autre troisième jeu de tranchants (34) avec une dimension de diamètre nominal (D34) supérieure est prévu dans la direction d'avance derrière le jeu de barres de guidage (36).

17. Outil de finition d'alésage selon l'une quelconque des revendications 1 à 16, **caractérisé en ce que** la valeur de laquelle la dimension de diamètre nominal (D36) du jeu de barres de guidage (36) est inférieure à la dimension de diamètre nominal (D32) du premier jeu de tranchants (32) est comprise dans la plage entre 0,0008 à 0,0014 x D.
